# EUROPÄISCHE PATENTSCHRIFT

(11) **EP 2 515 499 B1**
(45) Veröffentlichungstag und Bekanntmachung des Hinweises auf die Patenterteilung: **28.10.2015**
(21) Anmeldenummer: 11169320.6
(22) Anmeldetag: 09.06.2011
(51) Int. Cl.: H04L 29/06, G06F 21/00

(54) **Verfahren zum Erzeugen eines kryptographischen Schlüssels für ein geschütztes digitales Datenobjekt auf Basis von aktuellen Komponenten eines Rechners**
Method for generating a cryptographic key for a secure digital data object on the basis of the current components of a computer
Procédé de production d'une clé cryptographique pour un objet de données numérique protégé, basée sur des composants actuels d'un ordinateur

(30) Priorität: 21.04.2011 EP 11163413
(43) Veröffentlichungstag der Anmeldung: 24.10.2012
(73) Patentinhaber: Wibu-Systems AG, 76137 Karlsruhe (DE)
(72) Erfinder: Wichmann, Peer, Dr., 76646 Bruchsal (DE); Reuther, Udo, 77855 Achern (DE)
(74) Vertreter: Durm & Partner

(56) Entgegenhaltungen:
- WO-A2-03/036442
- US-A1- 2006 064 756

## Beschreibung

Die vorliegende Erfindung betrifft ein Verfahren zum Erzeugen eines kryptographischen Schlüssels auf Basis von aktuellen Komponenten eines Rechners. Der kryptographische Schlüssel dient zur Entschlüsselung eines verschlüsselten, rechnerspezifischen Berechtigungscodes zur Ausführung eines geschützten digitalen Datenobjekts auf dem Rechner. Der rechnerspezifische Berechtigungscode ist mit einem Schlüssel verschlüsselt, der auf originären Komponenten des Rechners beruht. Die originären Komponenten des Rechners sind die Komponenten, die zu einem vorbestimmten Zeitpunkt, beispielsweise zum Zeitpunkt der Installation einer Datei oder eines Anwendungsprogramms, auf dem Rechner vorhanden sind. Dadurch wird sichergestellt, dass das geschützte digitale Datenobjekt nur auf dem einen Rechner, für den es lizenziert ist, verwendet werden kann.

Im Rahmen der vorliegenden Anmeldung wird der Begriff "digitales Datenobjekt" in seiner allgemeinen Form verstanden, wonach ein Datenobjekt ein strukturierter Bestandteil zusammengehöriger Daten ist, die auf einem Medium gespeichert oder in einem Speicher zwischengespeichert werden können. Von dem Begriff "digitales Datenobjekt" sind zum einen ausführbare Dateien, wie beispielsweise ausführbare Programme, Applikationen oder Anwendungsprogramme, Programme in Maschinensprache oder in Skriptsprachen umfasst. Unter den Begriff fallen auch nicht-ausführbare Dateien, wie beispielsweise Programme im Quelltext, Textdateien, Datenbankdateien, Audiodateien, Bilddateien, Videodateien oder andere digitale Inhalte oder allgemeine binäre Dateien, wie sie z. B. von proprietären Programmen zur Datenspeicherung verwendet werden. Ebenso sind Gerätedateien, wie beispielsweise Mousetreiber oder andere Treiberdateien umfasst. Zum anderen sind neben diesen Arten von Datenobjekten, die über die Laufzeit eines Programms hinaus gespeichert werden und als nicht-flüchtige Dateien oder Datenobjekte bezeichnet werden, auch sogenannte Livestream-Datenobjekte oder -Daten umfasst, wie beispielsweise Livestream-Videodaten, die nur für eine bestimmte Zeit auf einem Rechner zwischengespeichert werden, häufig in einem flüchtigen Speicher (volatile storage), z.B. RAM.

Typischerweise werden digitale Datenobjekte, wie z. B. Anwendungsprogramme auf Rechnern oder Computern durch elektronische Schutzmechanismen, wie Lizenzen oder digitale Rechtemanagementsysteme (DRM-Systeme) geschützt. Hierdurch wird gewährleistet, dass nur registrierte Benutzer oder Benutzer, die eine Lizenz käuflich erworben haben, zur Verwendung eines digitalen Datenobjekts, wie beispielsweise zur Ausführung eines Anwendungsprogramms, berechtigt sind. Im Folgenden wird ohne Einschränkung der Allgemeinheit die der Erfindung zugrunde liegende Problemstellung und Lösung anhand von Anwendungsprogrammen beschrieben.

Beispielsweise ist es üblich, eine Lizenznummer oder einen Produktschlüssel während der Installation des Anwendungsprogramms oder der Software anzugeben und in ein elektronisches Formular einzutragen. Im Sinne der vorliegenden Anmeldung sind Anwendungsprogramme und Software synonym gebraucht. Es handelt sich hierbei um ausführbare Dateien, die auf einem Computer, einem Rechner oder einem Datenverarbeitungsgerät ausgeführt werden können. Auch die Begriffe "Gerät, Datenverarbeitungsgerät, Rechner und Computer" werden synonym verwendet, sofern nichts anderes angegeben ist.

Neben der Möglichkeit des Eintragens eines Lizenzschlüssels während der Installation ist es auch bekannt, sogenannte Dongle zu verwenden. Ein Dongle ist ein Datenverarbeitungsgerät, das an einem Computer angeschlossen wird und als Autorisierungsschlüssel für ein Anwendungsprogramm verwendet wird. Dongle können beispielsweise in Form von USB-Sticks ausgeführt sein. Das geschützte Computerprogramm prüft dabei während der Ausführung oder bei Start des Programms, ob der entsprechende Dongle vorhanden ist.

Darüber hinaus ist zum Schutz von Softwareprogrammen bekannt, die zu schützende Software an einen bestimmten Rechner zu koppeln. Bei einem Programmstart werden automatisch bestimmte Komponenten des Rechners abgefragt und deren spezifische Werte, beispielsweise deren Seriennummern oder die "MAC-Adresse" des Rechners ermittelt. Sind alle erforderlichen Komponenten vorhanden, so wird die Ausführung der Software gestattet. Bei dieser Art der Überprüfung wird nicht nur überprüft, ob die entsprechende Hardware-Komponente vorhanden ist, sondern auch, ob die Hardware-Komponente diejenige ist, für welche die Lizenz erteilt wurde. Auf diese Weise wird ausgeschlossen, dass die Software auch auf einem anderen Computer mit den gleichartigen Hardware-Komponenten ausgeführt werden kann. Die Software erfordert genau dieselben Komponenten, die bei der Installation oder Erzeugung des Lizenzschlüssels vorhanden waren.

WO 03/036442 offenbart ein derartiges Verfahren.

Bei dieser Art des Schutzes ist es notwendig, einen Rechner oder ein anderes technisches Gerät möglichst zweifelsfrei und fälschungssicher zu erkennen. Dies wird jedoch dadurch erschwert, dass die Geräte im Laufe der Zeit einem technischen Wandel durch Reparaturen, Modifikationen der einzelnen Komponenten, wie beispielsweise Modernisierungen, der Änderung des Einsatzfeldes oder geänderten Anforderungen unterzogen sind. Auch besteht die Möglichkeit, dass einzelne Komponenten temporär nicht vorhanden sind, beispielsweise in einer geänderten Einsatzumgebung des Computers auf eine zweite Netzwerkkarte verzichtet wird, die originär in dem Rechner vorhanden war. Darüber hinaus besteht auch die Möglichkeit, dass einzelne Merkmale des Rechners, also Komponenten, temporär nicht korrekt ermittelt werden können. Dies mag auf temporären Softwarefehlern, laufzeitbedingten Systembeschränkungen, temporären Defekten oder Abschaltungen einzelner Komponenten beruhen.

Die Identifikation der einzelnen Komponenten oder eines Rechners wird sich in vielen Fällen auf eine Lizenzierung von digitalen Dateien, Anwendungsprogrammen oder Software beziehen oder auf einen Nachweis von Garantieansprüchen. Derartige Ansprüche können dann automatisch und ohne manuelle Nachprüfung verarbeitet werden.

Bei dieser Art der Lizenzierung, die sicherstellt, dass eine lizenzierte Software nur auf einem bestimmten Rechner ausgeführt werden kann, ist ein guter Schutz des Rechteinhabers gegeben. Es wird sichergestellt, dass die digitale Datei auf keinem anderen Rechner installiert oder ausgeführt werden kann. Darüber hinaus bietet sie für den Anwender ein einfaches Verfahren, um sicherzustellen, dass käuflich erworbene digitale Dateien nur auf seinem Rechner ausführbar sind. Es müssen keine Zusatzgeräte am Rechner installiert (z. B. Dongle) und keine langen Installationsschlüssel gemerkt und abgetippt werden. Auch kann ein derartiger Schlüssel nicht verloren gehen, weil sich die Software auf dem entsprechenden Rechner jederzeit wieder installieren lässt. Allerdings hat dieses Verfahren den Nachteil, dass Änderungen an dem Rechner nicht oder nur sehr eingeschränkt möglich sind.

Im Stand der Technik werden deshalb nur wenige Merkmale bzw. Komponenten des Rechners verwendet, um diesen Schutz zu gewährleisten. In der Regel müssen nicht alle ursprünglich in dem Computer installierten Komponenten (Merkmale) konkret vorhanden sein. Es wird als ausreichend angesehen, wenn beispielsweise drei von fünf Merkmalen vorhanden sind. Aus den ursprünglich festgelegten Merkmalen lassen sich nun Kombinationen bzw. zulässige Konfigurationen ermitteln, bei denen z. B. drei von fünf Merkmalen vorhanden sind. Hieraus ergeben sich insgesamt zehn Möglichkeiten, also zulässige Konfigurationen, die abgefragt und überprüft werden müssen. Eine größere Anzahl von Merkmalen führt zu einer sehr großen Anzahl von Kombinationen, was das Verfahren starr und träge macht.

Wenn der Schutz für den Rechteinhaber dadurch verbessert werden soll, dass mehrere Merkmale zwingend abgeprüft bzw. aus einer Vielzahl von Merkmalen eine kleinere Teilmenge abgeprüft werden sollen, steigt die Anzahl der Kombinationen stark an. Sollen etwa vier von zehn Komponenten mit den ursprünglichen Komponenten identisch sein, so ergeben sich insgesamt 210 (=(10*9*8*7)/(4*3*2*1)) Möglichkeiten. Die Zahl der möglichen Konfigurationen berechnet sich aus dem Binominalkoeffizient von (N, k), wobei N die Zahl der originär vorhandenen Komponenten ist und k die Anzahl der aktuellen Komponenten, die mit den originären Komponenten übereinstimmen muss. Das Verfahren ist deshalb unpraktisch und nicht gebräuchlich.

Aus diesen Nachteilen und den damit zusammenhängenden Problemen im Stand der Technik ergibt sich die Aufgabe, ein Verfahren vorzuschlagen, mit dem eine Koppelung eines geschützten digitalen Datenobjekts, z. B. eines Anwendungsprogramms, an einem bestimmten Rechner erfolgt, wobei das Verfahren jedoch hinreichend flexibel sein soll, wenn einzelne Komponenten verändert werden.

Gelöst wird die vorliegende Aufgabe durch ein Verfahren mit den Merkmalen des Anspruchs 1.

Bevorzugte, nicht selbstverständliche Weiterbildungen und Ausprägungen des Verfahrens sind in den Unteransprüchen definiert.

Mittels des erfindungsgemäßen Verfahrens wird ein kryptographischer Schlüssel auf Basis von aktuellen Komponenten eines Rechners erzeugt. Der kryptographische Schlüssel wird für die Entschlüsselung eines verschlüsselten, rechnerspezifischen Berechtigungscodes verwendet. Der Berechtigungscode (Autorisierungscode) dient zum Freischalten der Verwendung eines geschützten digitalen Datenobjekts, z. B. zur Ausführung eines Anwendungsprogramms oder einer geschützten Applikation, auf dem Rechner oder einem Datenverarbeitungsgerät. Der rechnerspezifische bzw. gerätespezifische Berechtigungscode ist mittels eines kryptographischen Schlüssels verschlüsselt, der wiederum von den originären Komponenten des Rechners abhängt. Die originären Komponenten des Rechners sind diejenigen Komponenten, auf deren Grundlage der Berechtigungscode erzeugt wird. Dies können beispielsweise die Komponenten sein, die initial bei der erstmaligen Installation des Anwendungsprogramms auf einem bestimmten Rechner vorhanden sind und von dem entsprechenden Verfahren abgerufen und genutzt werden. Die originären Komponenten können auch die initial ermittelten Komponenten zum Zeitpunkt des Erwerbs einer Lizenz von einem Rechteinhaber oder der Installation des Berechtigungscodes oder zu einem vorbestimmten Zeitpunkt sein.

Um einen Rechner oder ein anderes technisches Gerät möglichst eindeutig identifizieren zu können, wird eine möglichst große Anzahl von Erkennungsmerkmalen erfasst. Die Erkennungsmerkmale beruhen auf den Komponenten des Rechners oder eines anderen technischen Gerätes, auf dem das geschützte digitale Datenobjekt verwendet werden soll. Die Erkennungsmerkmale für die originären Komponenten des Rechners sind in einer Inventarliste abgelegt. Somit ist festgelegt, welche Merkmale des Rechners ermittelt werden müssen, mit anderen Worten für welche Komponenten des Rechners die Merkmale vorhanden sein müssen.

Im Folgenden wird ohne Einschränkung der Allgemeinheit das erfindungsgemäße Verfahren für die Lizenzierung eines digitalen Datenobjekts für einen speziellen Rechner erläutert.

Erfindungsgemäß wird zum Erzeugen des kryptographischen Schlüssels bei der Verwendung des geschützten digitalen Datenobjekts zu jedem Merkmal des Rechners, das in einer Inventarliste vermerkt ist (beispielsweise zu jeder Hardware-Komponente des Rechners) automatisch der aktuelle Merkmalswert ermittelt. Die Inventarliste umfasst die Merkmale für die originären Komponenten des Rechners, beispielsweise bei der Lizenzierung des geschützten digitalen Datenobjekts oder bei der Installation eines geschützten Anwendungsprogramms, Originär-Prüfsummen für jeden Originär-Merkmalswert zu den in der Inventarliste abgelegten Merkmalen sowie Redundanzwerte, die aus der Gesamtheit der Originär-Merkmalswerte ermittelt wurden. Zu den ermittelten, aktuellen Merkmalswerten werden jeweils die aktuellen Prüfsummen berechnet. In einem weiteren Schritt des Verfahrens werden die aktuellen Prüfsummen mit den Originär-Prüfsummen verglichen, die initial aus den Originär-Merkmalswerten berechnet wurden. Bei Gleichheit der Originär-Prüfsumme mit der aktuellen Prüfsumme wird in einem nächsten Schritt der aktuelle Merkmalswert in einem aktuellen Merkmalsvektor abgespeichert. Bei Ungleichheit der beiden Prüfsummen, also wenn die Originär-Prüfsumme und die aktuelle Prüfsumme für ein Merkmal des Rechners voneinander abweichen, werden anstelle des aktuellen Merkmalswertes Leerstellen in den aktuellen Merkmalsvektor geschrieben. Auf diese Weise entsteht ein aktueller Merkmalsvektor, der den aktuellen Zustand des Rechners und seiner Komponenten charakterisiert.

Wurden einige Merkmale des Rechners verändert, beispielsweise weil Komponenten ausgetauscht, erneuert oder ausgebaut wurden, so wird mittels des erfindungsgemäßen Verfahrens in einem weiteren Schritt mit Hilfe der vorhandenen Redundanzdaten der aktuelle Merkmalswertevektor angepasst. Die fehlenden Merkmalswerte in dem aktuellen Merkmalswertevektor werden mittels der Redundanzwerte ermittelt. Der aktuelle Merkmalswertevektor wird dann mit den ermittelten Merkmalswerten vervollständigt, so dass die vorhandenen Leerstellen oder Fehlstellen überschrieben werden. Ist der Rechner nicht verändert worden, so liegt ein vollständiger Merkmalsvektor vor.

Aus dem vollständigen bzw. vervollständigten Merkmalswertevektor wird der kryptographische Schlüssel generiert, der ein Entschlüsseln des rechnerspezifischen Berechtigungscodes ermöglicht. Das Generieren des kryptographischen Schlüssels erfolgt bevorzugt mittels einer Schlüsselableitung. Darunter ist ein kryptographisches Primitiv zu verstehen, mit dem aus einer Menge Rohmaterial kryptographische Schlüssel abgeleitet werden. Aus dem entstehenden Schlüssel kann weder auf das Rohmaterial noch andere abgeleitete Schlüssel zurückgeschlossen werden. Ein Beispiel für eine derartige Schlüsselableitung ist eine kryptographische Hash-Funktion.

Nachdem am Ende des erfindungsgemäßen Verfahrens der kryptographische Schlüssel vorliegt, kann bevorzugt in einem weiteren Schritt der verschlüsselte Berechtigungscode entschlüsselt werden. Mittels des entschlüsselten Berechtigungscodes kann dann das digitale Datenobjekt freigeschaltet werden, so dass es von dem Benutzer verwendet werden kann. Bei Audiodateien kann beispielsweise die Musik oder der Ton gehört werden, Videodateien können angesehen werden, Anwendungsprogramme lassen sich ausführen. Das erfindungsgemäße Verfahren wird beispielsweise bei jedem Start des Rechners oder bei jedem Start eines Anwendungsprogramms bzw. der Verwendung eines digitalen Datenobjekts automatisch ausgeführt. Beispielsweise kann das Verfahren in einem Computerprogramm implementiert oder als ausführbare Datei auf einem Rechner gespeichert sein.

In einer vorteilhaften Weiterbildung des Verfahrens wird vor der erstmaligen Ausführung die Inventarliste mit den originären Komponenten des Rechners erzeugt. Über die Inventarliste kann ausgewertet werden, welche Merkmale initial erhoben wurden. Für neu hinzugekommene Hardware-Merkmale bzw. Komponenten müssen keine Auswertungen gemacht werden. Beispiele hierfür sind neue Sensoren bei Industrieanlagen oder hinzugefügte Netzwerkadapter bei Computern. Für die erhobenen Merkmale kann über die Prüfsummen bzw. Prüfwerte ermittelt werden, ob die Merkmalswerte den initial erhobenen Merkmalswerten entsprechen, ohne jedoch die eigentlichen Merkmalswerte offenzulegen. Neben Prüfsummen könnten auch kryptographische Prüfmechanismen, wie z. B. Hash-Summen oder Protokolle zum Bit-Commitment eingesetzt werden. Diese Mechanismen stellen sicher, dass der Merkmalswertevektor zwar definierte Fehlstellen, jedoch keine Fehler enthält.

Bevor das erfindungsgemäße Verfahren zum Erzeugen des kryptographischen Schlüssels für die Entschlüsselung des Berechtigungscodes von geschützten digitalen Datenobjekten ablaufen kann, muss einmalig eine Mehrzahl von Schritten ausgeführt werden. Diese Schritte werden in der Regel bei der Installation eines Programms oder bei dem Erwerb einer Lizenz erfolgen. Dazu wird zunächst eine Inventarliste mit Merkmalen für die originären Komponenten des Rechners erzeugt. Die originären Komponenten des Rechners sind die Komponenten, die bei der Erstellung der Inventarliste vorhanden sind. Die Lizenz bzw. der rechnerspezifische Berechtigungscode wird mittels eines Schlüssels verschlüsselt, der von diesen originären Komponenten abhängt. In der Inventarliste sind nur die Merkmale (z. B. Netzwerkkarte oder Festplatte) gespeichert, nicht jedoch die Merkmalswerte selbst (z. B. Herstellername, Seriennummer).

In einem weiteren Schritt werden zu den Merkmalen, die in der Inventarliste abgelegt sind, die originären Merkmalswerte ermittelt. Beispielsweise ist dies für eine Netzwerkkarte der Herstellername oder für das Merkmal "Hardwareadresse einer Netzwerkkarte" die "MAC-Adresse" selbst. Für jeden dieser Originär-Merkmalswerte wird eine Originär-Prüfsumme ermittelt. Dies ist eine Prüfsumme oder Prüfziffer, die keinen Rückschluss auf den Wert des Originär-Merkmalswerts zulässt, jedoch eine Überprüfung erlaubt.

Aus der Gesamtheit der Originär-Merkmalswerte werden in einem weiteren Schritt Redundanzwerte ermittelt, die es erlauben, fehlende Merkmalswerte zu berechnen. Prinzipiell gilt dabei, dass höchstens so viele fehlende Werte korrigiert oder berechnet werden können, wie Redundanzdaten angegeben sind. Sind beispielsweise bei einem System 128 Bit Redundanzdaten angegeben, so können maximal 128 Bit Fehlerwerte korrigiert werden. Durch die Anzahl der Redundanzwerte bzw. durch deren Wertemenge, kann also festgelegt werden, wie viele Merkmalswerte erzeugt werden können, ohne dass die Merkmalswerte selbst vorhanden sind.

In einer bevorzugten Ausgestaltung des erfindungsgemäßen Verfahrens wird nach dem Erzeugen der Inventarliste mit den Merkmalen für die originären Komponenten des Rechners, nach dem Ermitteln der Prüfsummen der originären Merkmalswerte sowie der Redundanzwerte eine sogenannte Originär-Inventarliste erzeugt. Diese umfasst die initial festgelegten Originär-Merkmale des Rechners, die Prüfsummen der entsprechenden Originär-Merkmalswerte und die Redundanzwerte. Die Merkmalswerte selbst sind in der Inventarliste nicht enthalten. In einem weiteren Schritt werden aus der Gesamtheit der originären Merkmalswerte ein oder mehrere kryptographische Schlüssel generiert, die für die Erzeugung eines rechnerspezifischen Berechtigungscodes für das zu schützende digitale Datenobjekt dienen. Die Originär-Inventarliste und die generierten Schlüssel werden automatisch an einen Server übermittelt, bevorzugt über ein Netzwerk, über das Internet oder über eine andere Datenverbindung zwischen dem Server und dem Rechner.

Nach dem Versenden der Daten an den Server werden die Originär-Merkmalswerte und die generierten Schlüssel auf dem Rechner gelöscht, so dass sie für die weitere Verwendung nicht mehr zur Verfügung stehen. Nachdem die Daten auf dem Server empfangen wurden, wird der gerätespezifische Berechtigungscode zur Verwendung des geschützten digitalen Datenobjekts mittels des oder der empfangenen, kryptographischen Schlüssel auf dem Server generiert. Er ist mit dem kryptographischen Schlüssel des Rechners verschlüsselt. Der so erzeugte Berechtigungscode wird von dem Server an den Rechner übermittelt. Das digitale Datenobjekt kann nur verwendet werden, wenn der verschlüsselte Berechtigungscode entschlüsselt wird. Der Schlüssel muss dazu aus den aktuellen Merkmalswerten des Rechners neu erzeugt werden. Da die Originär-Merkmalswerte und daraus erzeugten Schlüssel auf dem Rechner gelöscht wurden, besteht keine Möglichkeit, diese für die Entschlüsselung des Berechtigungscodes zu verwenden. Auf diese Weise wird für den Rechteinhaber des digitalen Datenobjekts sichergestellt, dass das geschützte Datenobjekt nur auf dem Rechner verwendet werden kann, für den die Lizenz erteilt ist bzw. die Erlaubnis und Berechtigung ausgegeben wurde.

In einer weiter bevorzugten Ausgestaltung des erfindungsgemäßen Verfahrens wird neben dem generierten Schlüssel auch die Originär-Inventarliste an den Server übermittelt. Auf dem Rechner wird die Originär-Inventarliste einschließlich der Originär-Prüfsummen gelöscht, sobald die Daten übermittelt wurden. Die Originär-Inventarliste, die die Merkmale, die Originär-Prüfsummen der Originär-Merkmalswerte und die Redundanzwerte umfasst, wird auf dem Server signiert. In einer bevorzugten Ausführungsform des erfindungsgemäßen Verfahrens wird die Originär-Inventarliste auf dem Server derart verändert, dass ein Integritätsschutz der geänderten Inventarliste gewährleistet ist. Der Integritätsschutz erfolgt bevorzugt durch das Einfügen einer digitalen Signatur oder eines kryptographischen Schlüssels, der bei der Auswertung der Inventarliste auf dem Rechner berücksichtigt wird. Vorzugsweise wird der Integritätsschlüssel bei dem Vergleich der Originär-Prüfsummen mit den aktuellen Prüfsummen verwendet. Hierdurch wird für den Rechteinhaber sichergestellt, dass die auf dem Server signierten und/oder verschlüsselten Originär-Prüfsummen für den Vergleich verwendet werden. Die nicht rechtmäßige Umgehung des erfindungsgemäßen Verfahrens wird deutlich erschwert und der Schutz des Berechtigungscodes erhöht.

In einem weiteren Schritt wird die signierte Inventarliste an den Rechner übertragen. Sie wird auf dem Rechner abgespeichert und bildet die Grundlage für die Abfrage der aktuellen Merkmalswerte der einzelnen Merkmale des Rechners.

Das erfindungsgemäße Verfahren weist den Vorteil auf, dass eine Vielzahl von Merkmalen ermittelt werden kann, die für die Lizenzierung als Grundlage dienen. Da fehlende Merkmale der aktuellen Gerätekonfiguration mittels der Redundanzdaten ermittelt werden können, muss keine feste Merkmalskombination hinterlegt sein, wie es im Stand der Technik üblich ist. Vielmehr genügt es, wenn eine vorbestimmte Anzahl von Merkmalen vorhanden ist und erkannt wird. Dies bietet den Vorteil, dass die Freischaltung der geschützten digitalen Datenobjekte beispielsweise auch dann noch erfolgen kann, wenn Änderungen an der Hardwarekonfiguration des Rechners erfolgt sind. Obwohl die originäre Hardware-Identifikation und Konfiguration an den Hersteller übergeben werden - dies erfolgt mittels der Inventarliste - und eine Freischaltung des Datenobjekts speziell für diesen Rechner erstellt ist, werden Abweichungen und Änderungen der Konfiguration in gewissen Grenzen zugelassen. Die genauen Parameter zur Toleranz können von dem Lizenzgeber des digitalen Datenobjekts, beispielsweise von dem Rechteinhaber einer Software, festgelegt werden. Die Parameter werden in dem Server hinterlegt und stehen dort zur automatischen Verwendung zur Verfügung.

Das erfindungsgemäße Verfahren hat den weiteren Vorteil, dass nicht nur eine große Anzahl von Merkmalen für die Lizenzierung verwendet werden kann. Es können neben den Komponenten des Rechners auch andere Merkmale verwendet werden. Beispielsweise können (zusätzlich) auch Merkmalswerte von sogenannten Token, wie beispielsweise ID-Karten (Identitätskarten), USB-Sticks oder Flashcards verwendet werden. Möglich wäre auch, eine Geräteidentifikation eines mobilen Geräts, wie beispielsweise eines Mobiltelefons oder Smartphones zu verwenden, das drahtgebunden oder drahtlos mit dem Rechner kommunizieren muss. Hierbei könnte die IMEI-Nummer des Mobiltelefons zur Identifikation dienen. Bei dem Einsatz von elektronischen Identitätskarten oder anderen ID-Karten können auch personenbezogene Daten Grundlage für die Schlüsselerstellung bzw. Verschlüsselung sein. Diese werden bevorzugt zusätzlich zu den Komponenten des Rechners erfasst.

Das erfindungsgemäße Verfahren hat den Vorteil, dass die einzelnen Merkmale, also Komponenten des Rechners oder vergleichbare Merkmale, unterschiedlich gewichtet werden können. Vorzugsweise ist die Länge der Merkmalswerte in dem Merkmalswertevektor in Abhängigkeit des Merkmals unterschiedlich lang. Vorzugsweise erhalten Komponenten, die selten geändert werden oder einen hohen Stellenwert haben, eine höhere Gewichtung, die sich in einer größeren Länge der Merkmalswerte in dem Merkmalswertevektor widerspiegelt. Beispielsweise könnte die Adresse einer Netzwerkkarte mit 32 Bit festgelegt sein, während die Seriennummer der Grafikkarte oder die BIOS-Version des Rechners jeweils mit 16 Bit Länge angegeben ist. Der Merkmalswert eines sogenannten TPM-Chips (Trusted Platform Module) könnte beispielsweise eine Länge von 128 Bit haben. Dies entspricht einer Gewichtung von 25 % bei einem typischen Merkmalswertevektor von 512 Bit Länge. Ein TPM-Chip ist ein sogenannter Smartcard-Chip, der fest mit dem Rechner verbunden ist und eine eigene Seriennummer aufweist. Er ist in der Regel fest mit der Hauptplatine des Rechners verlötet und dient zur sicheren Speicherung, beispielsweise von geheimen Schlüsseln oder ähnlichen Informationen, die nicht zugänglich sein sollen.

In einer bevorzugten Ausführungsform hat der Merkmalswertevektor eine Länge von mindestens 64 Bit, 128 Bit, 256 Bit oder vorzugsweise von wenigstens 512 Bit. Für besonders sichere Anwendungen kann der Merkmalswertevektor eine Länge von wenigstens 1.024 Bit, 2.048 Bit oder 4.096 Bit aufweisen. Selbstverständlich können längere Merkmalswertevektoren eingesetzt werden.

Neben der Gewichtung der einzelnen Merkmale über die Länge der Merkmalswerte wird über die Datenmenge der Redundanzwerte festgelegt, wie tolerant das Verfahren ist. So wird festgelegt, wieviele Änderungen an einem Rechner vorgenommen werden dürfen bzw. wieviele Merkmale geändert sein oder nicht vorhanden sein können. Die Datenmenge der Redundanzwerte ist deshalb bevorzugt geringer als die Gesamtdatenmenge aller Merkmalswerte. Der Grenzwert für die Menge der Redundanzwerte liegt bevorzugt bei höchstens 10 % der Daten der Merkmalswerte. 90 % aller Merkmalswerte müssen also den originären Merkmalswerten entsprechen. In dem aktuellen Merkmalswertevektor müssen sich folglich 90 % aller Bits der Originär-Merkmalswerte wiederfinden. Lediglich 10 % können abweichen und mittels der Redundanzwerte ermittelt werden. In einer weiter bevorzugten Ausgestaltung des Verfahrens ist die Datenmenge der Redundanzwerte höchstens 20 %, 30 %, 40 %, 50 %, 60 %, 70 % oder 80 % der Datenmenge der Merkmalswerte. Je größer die Datenmenge der Redundanzwerte ist, desto mehr Abweichungen lässt das Verfahren zu. Dies hat den Vorteil, dass durch den Lizenzgeber vorgegeben werden kann, wie tolerant die Lizenzierung sein soll.

In einer bevorzugten Ausgestaltung des erfindungsgemäßen Verfahrens ist die Datenmenge der Redundanzwerte nicht fest vorgegeben, sondern kann über die Laufzeit (der Lizenz) erhöht werden, da bei älteren Rechnern und Computern einzelne Komponenten häufiger ausgetauscht werden. Beispielsweise ist es üblich, die Festplatte im Laufe der Zeit durch eine Größere zu ersetzen oder den Prozessor durch einen schnelleren Prozessor zu ersetzen. Deshalb wird die genutzte Datenmenge der Redundanzwerte in Abhängigkeit der Zeit erhöht, die seit der ersten Verwendung des geschützten digitalen Datenobjekts verstrichen ist. Vorzugsweise erfolgt die Erhöhung schrittweise.

Besonders bevorzugt wird die Zeit, die seit der ersten Verwendung des geschützten digitalen Datenobjekts verstrichen ist, in dem Rechner gezählt. Zu Beginn wird nur ein geringer Teil der Redundanzwerte für das Ermitteln der fehlenden Merkmalswerte verwendet. Der Anteil der genutzten Redundanzwerte wird mit fortschreitender Zeit vergrößert. Beispielsweise könnten zu Beginn lediglich 20 % der genutzten Redundanzwerte verwendet werden, nach einem Jahr bereits 30 %, nach zwei Jahren 40 % und nach drei Jahren 50 % oder 60 %.

Daneben hat es sich als vorteilhaft erwiesen, dass die Redundanzwerte an den Server übertragen und auf dem Rechner gelöscht werden. Die Redundanzwerte werden bevorzugt auf dem Server signiert, beispielsweise durch eine Signaturdatei oder einen elektronischen kryptographischen Schlüssel und anschließend an den Rechner übermittelt, wo sie abgespeichert und für die Ermittlung der fehlenden Merkmalswerte verwendet werden. Dies bietet die Möglichkeit, einen Integritätsschutz der Redundanzwerte zu realisieren. Der Rechteinhaber erhält also die volle Kontrolle über das Verfahren.

Bevorzugt werden die empfangenen Redundanzwerte auf dem Server verändert, besonders bevorzugt wird die Datenmenge der Redundanzwerte reduziert, bevor sie auf den Rechner zurückübertragen werden. Der Rechteinhaber kann so bestimmen, wie viele der Redundanzwerte zur Verfügung stehen.

In einer bevorzugten Ausgestaltung des erfindungsgemäßen Verfahrens wird die Gesamtheit der erzeugten Redundanzwerte in mehrere Teilmengen unterteilt. Jede der Teilmengen der Redundanzwerte wird mit einem separaten kryptographischen Teilmengen-Schlüssel verschlüsselt. Die kryptographischen Teilmengen-Schlüssel werden dem Rechner zeitabhängig zur Verfügung gestellt. Mit fortschreitender Zeit, seit der ersten Verwendung des digitalen Datenobjekts, können mehr Redundanzwerte zur Verfügung gestellt werden. Das Lizenzierungsverfahren wird folglich mit fortschreitender Zeit toleranter gegenüber Änderungen der Komponenten des Rechners. Die Bereitstellung der Teilmengen-Schlüssel, die für die Entschlüsselung der verschlüsselten Teilmenge der Redundanzwerte benötigt wird, kann auf einem separaten Rechner erfolgen, bevorzugt auf einem Server. Besonders bevorzugt erfolgt ihre Veröffentlichung in einem Netzwerk, beispielsweise über das Internet. Der Rechner, auf dem das geschützte digitale Datenobjekt verwendet werden soll, kann die Schlüssel automatisch herunterladen und eine weitere Teilmenge der Redundanzwerte entschlüsseln.

In einer ebenfalls bevorzugten Ausgestaltung des Verfahrens erfolgt die Anpassung der Fehlertoleranz des Verfahrens über die Laufzeit dadurch, dass bei Verwendung des geschützten digitalen Datenobjekts und der damit erfolgten Ermittlung der aktuellen Merkmalswerte des Rechners erkannt wird, dass die aktuellen Merkmalswerte von den Originär-Merkmalswerten abweichen. Die Abweichung der Merkmalswerte ist jedoch so tolerierbar, dass die fehlenden Merkmalswerte aus den vorhandenen Redundanzdaten berechnet werden können. Auf der Grundlage dieser aktuellen Merkmalswerte werden nun die Redundanzwerte aktualisiert. Die Aktualisierung der Redundanzwerte kann dadurch erfolgen, dass neue Redundanzwerte hinzugefügt werden, um den ursprünglichen Schlüssel, auf dem die Verschlüsselung des Berechtigungscodes beruht, weiter zu verwenden. Alternativ kann die Aktualisierung der Redundanzwerte dadurch erfolgen, dass ein neuer kryptographischer Schlüssel auf Grundlage der aktuellen Merkmalswerte, also auf Grundlage der aktuellen Merkmale der Rechnerkomponenten, erzeugt wird. Die Differenz des neuen kryptographischen Schlüssels zu dem originären kryptographischen Schlüssel wird auf dem Rechner abgespeichert. Durch einen Vergleich eines neu erzeugten Schlüssels mit der Differenz zu dem originären kryptographischen Schlüssel lässt sich ein Schlüssel berechnen, der zur Entschlüsselung des Berechtigungscodes verwendet werden kann.

Besondere Ausgestaltungen des erfindungsgemäßen Verfahrens zur Erzeugung eines kryptographischen Schlüssels werden nachfolgend anhand der Zeichnungen näher beschrieben. Die dabei erläuterten Merkmale können einzeln oder in Kombination verwendet werden, um bevorzugte Ausgestaltungen der Erfindung zu schaffen. Ohne Einschränkung der Allgemeinheit wird das erfindungsgemäße Verfahren anhand eines geschützten Applikationsprogramms als digitales Datenobjekt, das auf einem Rechner ablaufen soll, erläutert. Die anhand des Anwendungsprogramms und des Rechners beschriebenen Merkmale stellen keine Beschränkung der Allgemeinheit der in den Ansprüchen definierten Merkmale dar. Es zeigen:
- Fig. 1: ein System bestehend aus einem Server und einem Rechner des Benutzers, auf dem eine geschützte Software ablaufen soll;
- Fig. 2: eine Inventarliste mit Merkmalen des Rechners aus Fig. 1;
- Fig. 3: ein Beispiel einer erweiterten Inventarliste;
- Fig. 4: einen originären Merkmalsvektor;
- Fig. 5: einen Ablauf zur Erzeugung des Schlüssels mittels eines aktuellen Merkmalswertevektors;
- Fig. 6: einen schematisierten Ablauf eines Teils des Verfahrens;

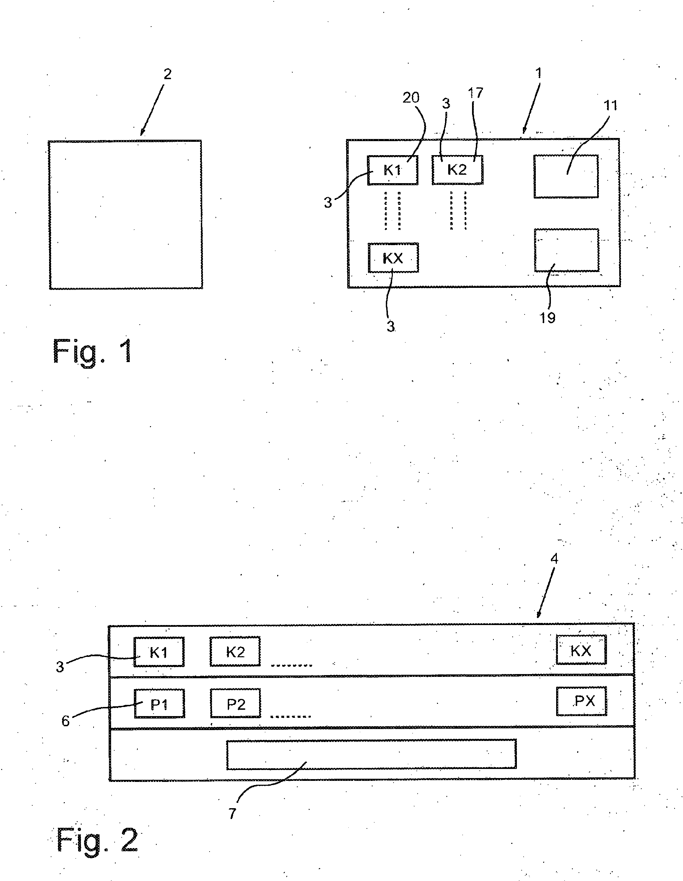

Figur 1 zeigt ein System mit einem Server 2 und mit einem Rechner 1, auf dem ein geschütztes digitales Datenobjekt, wie beispielsweise ein Anwendungsprogramm ablaufen soll. Das Datenobjekt 11 wird von einem Rechteinhaber lizenziert und ist durch einen Berechtigungscode geschützt. Der Berechtigungscode zur Freischaltung des Datenobjekts 11 ist an den Rechner 1 gebunden. Der Berechtigungscode wird mittels des Servers 2 des Rechtsinhabers erstellt und auf den Rechner 1 übertragen.

Zur Erstellung des Berechtigungscodes bzw. zu seiner Verschlüsselung werden Merkmale 3 des Rechners 1 verwendet. Diese Merkmale 3 spiegeln die einzelnen Komponenten K1, K2, K3, .... Kx des Rechners 1 wider. Eine Komponente kann beispielsweise die Netzwerkkarte, die Hauptplatine, die Grafikkarte, die Festplatte, die Betriebssystemversion, der Rechnername oder die Identifikations- oder Seriennummer eines Sicherheitsprozessors (TPM-Chip) sein. Anhand dieser Merkmale 3 wird eine Inventarliste 4 erzeugt, in der die Merkmale 3 aufgenommen sind.

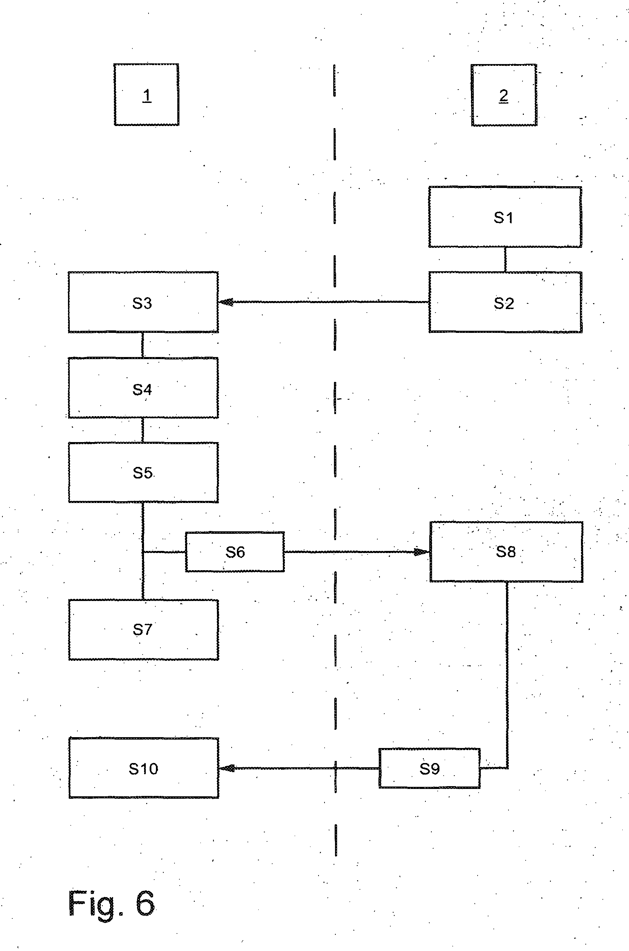

In einer bevorzugten Ausführungsform des erfindungsgemäßen Verfahrens wird zunächst in dem Server 2 eine Vorgabe von Merkmalen 3 erstellt, die zur Erstellung der Inventarliste 4 auf dem Rechner 1 dient. Die Vorgabe der Merkmale 3 für die Inventarliste 4 wird an den Rechner 1 übermittelt. Hieraus werden auf dem Rechner 1 automatisch eine Inventarliste 4 mit den Merkmalen 3 gemäß der Vorgabe des Servers 2 erzeugt. Diese fakultativen Schritte sind in den Verfahrensablauf in Figur 6, Schritte S1 bis S3, gezeigt.

Gemäß einer bevorzugten Ausführungsform des Verfahrens wird nun in einem Schritt S4 gemäß Figur 6 eine Inventarliste 4 mit Merkmalen 3 der originären Komponenten K1, ..., Kx erzeugt. In einem weiteren Schritt werden zu den in der Inventarliste 4 abgelegten Merkmalen 3 Originär-Merkmalswerte 5 ermittelt. Ein Originär-Merkmalswert 5 kann beispielsweise die Seriennummer der Hauptplatine oder der Festplatte sein. Aus den erhobenen Daten (Originär-Merkmalswerte 5) werden Originär-Prüfsummen 6 ermittelt, wobei jedem Originär-Merkmalswert 5 eine Originär-Prüfsumme 6 (P1, P2, ..., Px) zugeordnet ist. Aus der Gesamtheit der Originär-Merkmalswerte 5 werden zusätzlich Redundanzwerte 7 ermittelt, um im weiteren Verlauf des erfindungsgemäßen Verfahrens eine Fehlerkorrektur durchführen zu können.

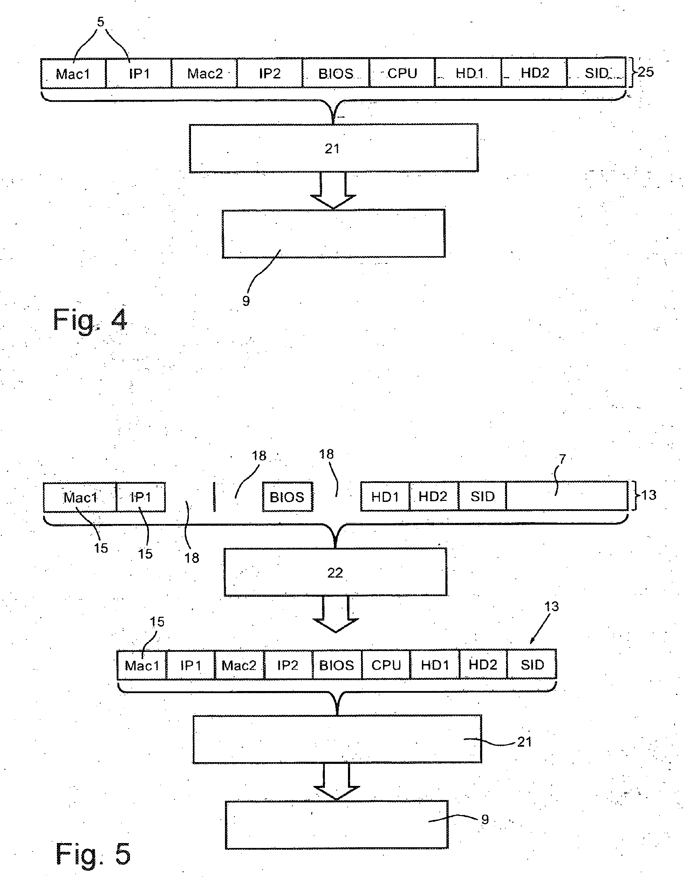

In einem weiteren Schritt wird nun aus den Merkmalen 3 des Rechners 1, den Originär-Prüfsummen 6 und den Redundanzwerten 7 eine Originär-Inventarliste 8 erzeugt. Zusätzlich wird aus der Gesamtheit 25 der Originär-Merkmalswerte 5 mittels einer kryptographischen Funktion 21, z. B. einer Hash-Funktion, ein kryptographischer Schlüssel 9 generiert, vgl. Figur 4. Dieser Verfahrensschritt ist als Schritt S5 in Figur 6 dargestellt. Der kryptographische Schlüssel 9 ist ein "sensitiver Schlüssel", der nur innerhalb des Programms oder Verfahrens verwendet werden kann. Er wird lediglich in einem flüchtigen Speicher zwischengespeichert. Er ist nicht durch andere Programme auslesbar und optional gegen Angriffe von außen besonders geschützt.

Bevorzugt wird gemäß dem Verfahren in dem Fall, wenn das digitale Datenobjekt 11 ein Anwendungsprogramm 12 ist, die Originär-Inventarliste 8 bei der Installation des Anwendungsprogramms 12 auf dem Rechner 1 erzeugt.

Der kryptographische Schlüssel 9 wird in dem Schritt S6 an den Server 2 übermittelt und dort empfangen. In einem Schritt S7 werden auf dem Rechner 1 die Originär-Merkmalswerte 5 sowie der kryptographische Schlüssel 9 gelöscht. Auf dem Server 2 wird in einem Schritt S8 ein rechnerspezifischer Berechtigungscode 10 zur Verwendung des geschützten digitalen Datenobjekts 11 (z.B. geschütztes Anwendungsprogramm 12) mittels des empfangenen kryptographischen Schlüssels 9 generiert.

In Schritt S9 wird der verschlüsselte Berechtigungscode 10 vom Server 2 an den Rechner 1 übermittelt, der in einem Schritt S10 auf dem Rechner 1 gespeichert wird. Vorzugsweise wird dieser Berechtigungscode 10 ebenso wie die Originär-Inventarliste 8 in dem Rechner 1 geschützt abgelegt, beispielsweise in dem TPM-Chip 17. Als Schutzmechanismen werden kryptographische Mechanismen zum Integritätsschutz oder technische Maßnahmen zur Verschleierung des Speicherorts und zur redundanten Speicherung eingesetzt. Figur 2 zeigt eine schematische Darstellung der Originär-Inventarliste 8, mit mehreren Merkmalen 3, den Originär-Prüfsummen 6 (P1, P2, ..., Px) und den Redundanzwerten 7.

Um die einzelnen Merkmale 3 in der Inventarliste 4 zu gewichten, wird den Merkmalswerten 5, die in einem Merkmalswertevektor 13 zusammengefasst sind, jeweils eine unterschiedliche Länge zugeordnet. Die Angaben über die Länge der einzelnen Merkmalswerte 5 zu einem Merkmal 3 und die Position eines Merkmalswerts 5 in dem Merkmalsvektor 13 können in einer erweiterten Inventarliste 14 angegeben sein.

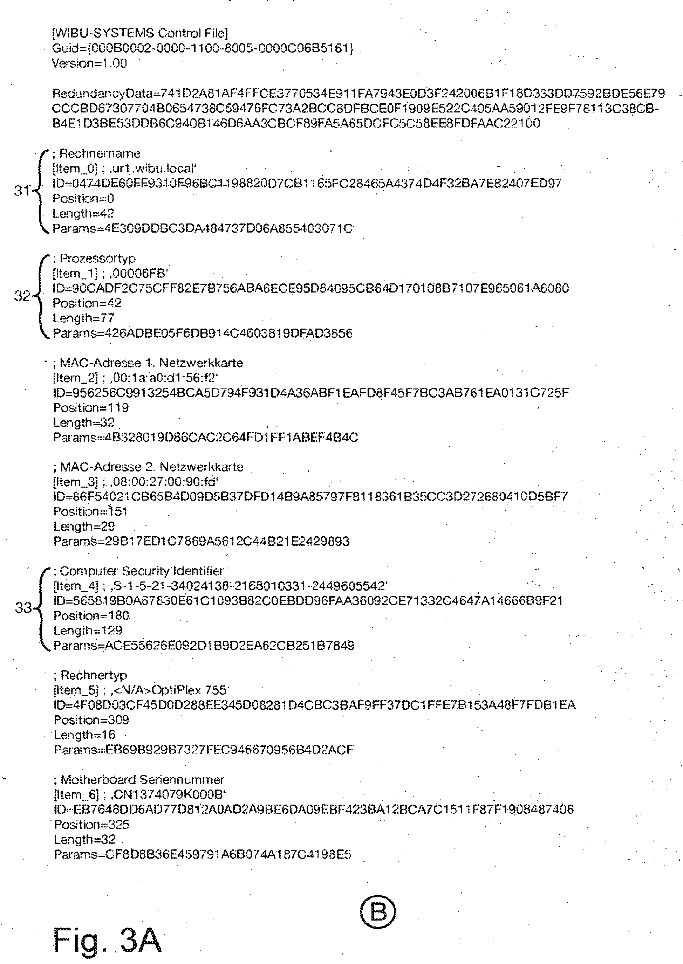

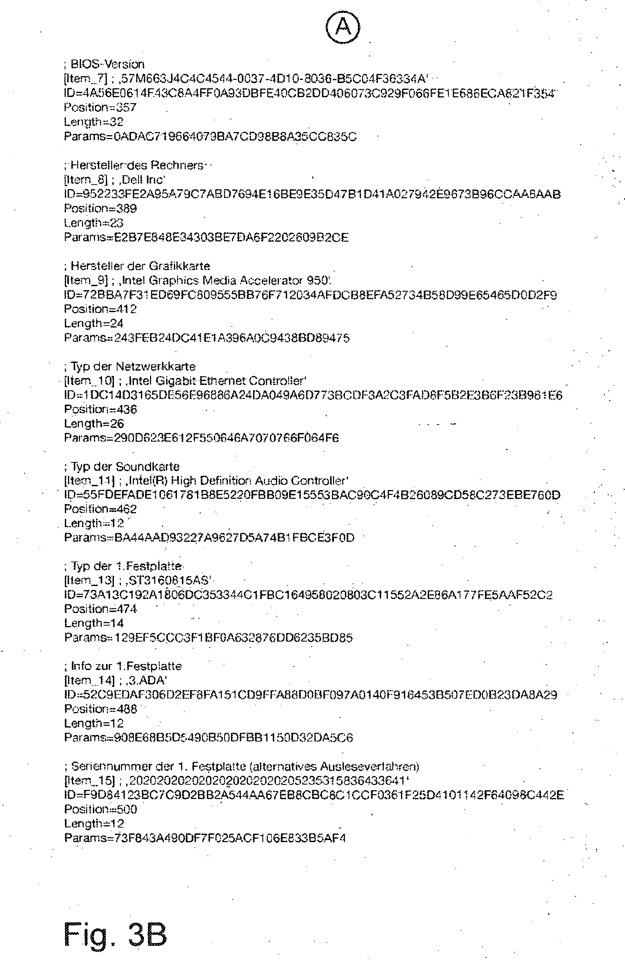

Figur 3 zeigt eine erweiterte Inventarliste 14. Die hier gezeigte Inventarliste 14 ist um einige zusätzliche Informationen erweitert, um die Liste und ihren Inhalt besser erläutern zu können. Die in [item_x] (x = 1, 2, ...) angegebenen Werte sind eingefügte Kommentare. Diese entsprechen im Wesentlichen dem Merkmalswert 5. In der im Rechner 1 abgelegten erweiterten Inventarliste 14 sind diese Werte nicht enthalten.

Die gezeigte Inventarliste 14 umfasst zunächst einen Kopf (Header) mit mehreren Zeilen (hier drei Zeilen). Der Header umfasst z. B. Angaben über den Ersteller der Inventarliste. Als nächstes enthält die Liste die Redundanzwerte 7, gefolgt von den Informationen zu den einzelnen Merkmalen 3.

In dieser bevorzugten Ausführungsform der Inventarliste 14 sind für jedes Merkmal 3 des Rechners 1 zunächst das Merkmal 3 selbst (Komponente, z. B. "Rechnername") angegeben, (dann der als [item_0] hinzugefügte Kommentar,) gefolgt von der Originär-Prüfsumme 6, der Position sowie der Länge des zugehörigen Merkmalswertes 15 in dem Merkmalswertevektor 13. Die letzte Information ist eine optionale Verwaltungsinformation ("Params"), die für die Verwaltung der Inventarliste 14 selbst und für die Ermittlung der Merkmalswerte 15 notwendig ist. Die Angaben zur Position und Länge des Merkmalswertes 15 sind fakultative Angaben dieser Ausführungsform. Bevorzugt darf die Länge des Merkmalswertes eine vorgegebene Anzahl von Bits nicht überschreiten, beispielsweise 256 Bit, 192 Bit oder bevorzugt 128 Bit.

In der Inventarliste 14 ist das erste Merkmal 31 der Rechnername. Im vorliegenden Fall wird der Merkmalswert 15 für das Merkmal 31 "Rechnername" in Position Null des Merkmalswertevektors 13 geschrieben. Die Länge dieses Merkmalswerts 15 ist 42 Bit.

Das zweite Merkmal 32 in der Inventarliste 14 ist der Prozessortyp. Der Merkmalswert 15 für den Prozessortyp wird in den Merkmalswertevektor 13 an Position 42 geschrieben und hat eine Länge von 77 Bit. Insgesamt ergibt sich aus der erweiterten Inventarliste 14, dass der Merkmalswertevektor 13 512 Bit aufweist. Somit hat der Prozessortyp eine sehr starke Gewichtung mit 77 Bit. Lediglich das Merkmal 33 des "Computer Security Identifier" mit einer Länge von 129 Bit ist noch stärker gewichtet.

Ausgehend von der Inventarliste 14 werden bei jedem Programmstart automatisch die einzelnen Schritte des erfindungsgemäßen Verfahrens durchlaufen. Zunächst werden die Merkmale 3 aus der Inventarliste 14 ausgelesen und die zugehörigen aktuellen Merkmalswerte 15 des Rechners 1 ermittelt. Zu jedem einzelnen Merkmalswert 15 wird die aktuelle Prüfsumme 16 berechnet und mit der entsprechenden Originär-Prüfsumme 6 des Einzelmerkmals 3 verglichen. Bei Gleichheit der Originär-Prüfsumme 6 mit der aktuellen Prüfsumme 16 wird der ermittelte Merkmalswert 15 in dem Merkmalsvektor 13 an der entsprechenden Position und mit der entsprechenden Länge abgelegt, wie sie in der Inventarliste 14 vermerkt sind. Wird keine Übereinstimmung der aktuellen Prüfsumme 16 mit der Originär-Prüfsumme 6 festgestellt, so wird in dem Merkmalswertevektor 13 der für das Merkmal 3 vorgesehene Wert mit Leerstellen 18 (Dummy-Merkmalswert, Fehlstelle) ausgefüllt. Ein derartiger Merkmalswertevektor 13 mit Leerstellen ist in Figur 5 gezeigt.

Bevorzugt werden an den Merkmalswertevektor 13 die Redundanzwerte 7 aus der Inventarliste 14 angehängt. Dieser erweiterte Merkmalswertevektor 13 wird nun weiter verarbeitet, bevorzugt mittels eines Auswertealgorithmus einer Auswerteeinheit 20 des Rechners 1. Es erfolgt nun eine Fehlerkorrektur, mit der die fehlenden Merkmalswerte 15 berechnet werden. Bevorzugt werden die in dem aktuellen Merkmalswertevektor 13 fehlenden Merkmalswerte 15 aus den Redundanzwerten 7, die auf den Aktivierungsdaten 5 (initial erhobene Merkmalswerte 5) beruhen, mittels eines Fehlerkorrekturverfahrens ermittelt. Als Fehlerkorrekturverfahren werden bevorzugt Erasure-Codes und besonders bevorzugt lineare Zufallscodes verwendet. Die Codes können auch klassische fehlerkorrigierende Codes sein, wie sie aus der Codierungstheorie bekannt sind.

Können aus den Redundanzwerten 7 die fehlenden Merkmalswerte 15 im aktuellen Merkmalswertevektor 13 nicht vollständig rekonstruiert werden, so ist es nicht möglich, den verschlüsselten Berechtigungscode 10 zu entschlüsseln. Eine Ausführung des Anwendungsprogramms 12 oder eine Verwendung des digitalen Datenobjekts 11 ist nicht möglich. Optional wird eine Information (Fehlermeldung) an den Server übermittelt.

Kann der aktuelle Merkmalswertevektor 13 mittels Fehlerkorrekturverfahren vervollständigt werden, so wird in einem weiteren Schritt der kryptographische Schlüssel 9 generiert. Bevorzugt wird er aus den Merkmalswerten 15 mittels einer kryptographischen Funktion 21 berechnet. Sehr bevorzugt wird dazu eine kryptographische Prüfsumme, besonders bevorzugt eine Hash-Funktion verwendet. Der Berechtigungscode 10 wird mittels des kryptographischen Schlüssels 9 entschlüsselt und das digitale Datenobjekt 11 bzw. das geschützte Anwendungsprogramm 12 freigeschaltet.

Bevorzugt wird das erfindungsgemäße Verfahren vor jeder Ausführung des geschützten Anwendungsprogramms 12 automatisiert auf dem Rechner 1 abgearbeitet, so dass vor jeder Ausführung des Anwendungsprogramms 12 die aktuellen Merkmalswerte 15 der aktuellen Merkmale 3 des Rechners 1 ermittelt werden.

Bei der Anwendung des erfindungsgemäßen Verfahrens muss zum Schutz des Rechteinhabers sichergestellt sein, dass bevorzugt nach dem Entschlüsseln des Berechtigungscodes 10 und/oder nach dem Freischalten des geschützten digitalen Datenobjekts 11 und/oder nach jedem Verwenden des geschützten digitalen Datenobjekts 11 der entschlüsselte Berechtigungscode 10 und/oder generierte kryptographische Schlüssel 9 auf dem Rechner 1 gelöscht wird. Damit ist ausgeschlossen, dass der Berechtigungscode 10 und/oder der kryptographische Schlüssel 9 zu einem späteren Zeitpunkt nochmals (unberechtigt) oder auf einem anderen Rechner verwendet werden können.

Bevorzugt wird der erzeugte kryptographische Schlüssel 9 nur in einem flüchtigen Speicher des Rechners 1 zwischengespeichert und kann bevorzugt von keinem anderen Programm als dem geschützten Anwendungsprogramm 12 ausgelesen und verwendet werden. Zusätzlich oder alternativ wird auch der entschlüsselte Berechtigungscode 10 nur in einem flüchtigen Speicher 19 des Rechners 1 gespeichert. Nach Beendigung der Verwendung des digitalen Datenobjekts 11 oder nach Ausführung des Anwendungsprogramms 12 wird der flüchtige Speicher 19 wieder gelöscht.

In einer bevorzugten Ausführungsform des erfindungsgemäßen Verfahrens ist das Verfahren in Form eines Computerprogramms implementiert, das auf einem Rechner automatisch ablaufen kann. Das Computerprogramm mit dem implementierten erfindungsgemäßen Verfahren kann auch Bestandteil des geschützten Anwendungsprogramms sein. Es kann auch ein eigenständiges Programm sein, das aufgerufen wird, wenn der Dateninhalt des Datenobjekts 11 ausgelesen oder verwendet werden soll.

Im Folgenden wird die Erfindung zur Vervollständigung der Offenbarung anhand der nachfolgenden Klauseln nochmals zusammenfassend beschrieben:
1. Verfahren zum Erzeugen eines kryptographischen Schlüssels auf Basis von aktuellen Komponenten eines Rechners zur Entschlüsselung eines verschlüsselten rechnerspezifischen Berechtigungscodes zur Freischaltung eines geschützten digitalen Datenobjekts auf dem Rechner, wobei der rechnerspezifischen Berechtigungscode mittels eines von originären Komponenten des Rechners abhängigen Schlüssels verschlüsselt ist, umfassend die folgenden Schritte:
   - Erzeugen einer Inventarliste mit Merkmalen für die originären Komponenten des Rechners;
   - Ermitteln von Originär-Merkmalswerten zu den in der Inventarliste abgelegten Merkmalen;
   - Ermitteln von Originär-Prüfsummen für jeden der Originär-Merkmalswerte;
   - Ermitteln von Redundanzwerten aus der Gesamtheit der Originär-Merkmalswerte;
   - Ermitteln der aktuellen Merkmalswerte zu den in der Inventarliste abgelegten Merkmale des Rechners;
   - Berechnen von aktuellen Prüfsummen aus den aktuellen Merkmalswerten;
   - Vergleichen der aktuellen Prüfsummen mit den Originär-Prüfsummen;
   - Bei Gleichheit der Originär-Prüfsumme mit der aktuellen Prüfsumme Abspeichern des aktuellen Merkmalswertes in einem aktuellen Merkmalswertevektor und bei Ungleichheit Erstellen von Leerstellen in dem aktuellen Merkmalswertevektor anstelle des aktuellen Merkmalswertes;
   - Ermitteln der fehlenden Merkmalswerte in dem aktuellen Merkmalswertevektor mittels der Redundanzdaten;
   - Vervollständigen des aktuellen Merkmalswertevektors mit den ermittelten Merkmalswerten;
   - Generieren des kryptographischen Schlüssels zum Entschlüsseln des Berechtigungscodes aus dem Merkmalswertevektor bevorzugt mittels einer Schlüsselableitung.
2. Verfahren nach Klausel 1, gekennzeichnet durch die weiteren Schritte:
   - Erzeugen einer Originär-Inventarliste mit den Merkmalen des Rechners, den Prüfsummen der Merkmale und den ermittelten Redundanzwerten;
   - Generieren eines kryptographischen Schlüssels aus der Gesamtheit der Originär-Merkmalswerten;
   - Übermitteln der Originär-Inventarliste und des generierten Schlüssels an einen Server und Empfangen der Daten auf dem Server;
   - Löschen der Originär-Merkmalswerte und des Schlüssels auf dem Rechner;
   - Generieren des gerätespezifischen Berechtigungscodes zur Verwendung des geschützten digitalen Datenobjekts mittels des empfangenen kryptographischen Schlüssels auf dem Server;
   - Übermitteln des mit dem kryptographischen Schlüssel verschlüsselten Berechtigungscodes von dem Server an den Rechner und Empfangen des Berechtigungscodes im Rechner;
   und/oder durch die weiteren Schritte:
   - Entschlüsseln des verschlüsselten Berechtigungscodes mittels des erzeugten kryptographischen Schlüssels und
   - Freischalten des digitalen Datenobjekts mittels des entschlüsselten Berechtigungscodes.
3. Verfahren nach Klausel 1 oder 2, gekennzeichnet durch die folgenden weiteren Schritte:
   - Übermitteln der Originär-Inventarliste an den Server;
   - Löschen der Originär-Inventarliste einschließlich der Originär-Prüfsummen auf dem Rechner;
   - Signieren der Originär-Inventarliste auf dem Server;
   - Übertragen der signierten Inventarliste an den Rechner und Empfangen der signierten Inventarliste auf dem Rechner.
4. Verfahren nach einer der vorhergehenden Klauseln, gekennzeichnet durch die folgenden weiteren Schritte:
   - Übertragen der Redundanzwerte von dem Rechner an den Server;
   - Löschen der Redundanzwerte auf dem Rechner;
   - Signieren der übertragenen Redundanzwerte auf dem Server;
   - Übertragen der signierten Redundanzwerte von dem Server an den Rechner und Empfangen der Redundanzwerte auf dem Rechner.
5. Verfahren nach Klausel 4, gekennzeichnet durch den weiteren Schritt:
   - Verändern der empfangenen Redundanzwerte auf dem Server, bevorzugt Reduzieren der Datenmenge der Redundanzwerte;
   - Übertragen der geänderten Redundanzwerte an den Rechner.
6. Verfahren nach einer der vorhergehenden Klauseln, dadurch gekennzeichnet, dass das digitale Datenobjekt ein Anwendungsprogramm ist.
7. Verfahren nach einer der vorhergehenden Klauseln, gekennzeichnet durch die weiteren Schritte:
   - Erstellen einer Vorgabe von Merkmalen in dem Server zur Erstellung der Inventarliste in dem Rechner;
   - Übermitteln der Vorgabe von Merkmalen für die Inventarliste an den Rechner;
   - Erzeugen einer Inventarliste mit Merkmalen des Rechners gemäß der von dem Server empfangenen Vorgabe.
8. Verfahren nach einer der vorhergehenden Klauseln, dadurch gekennzeichnet, dass die Inventarlisten für jedes Merkmal des Rechners Angaben zur Position des zugehörigen Merkmalswerts in den Merkmalswertevektor umfassen und/oder für jedes Merkmal Informationen über die Länge des Merkmalswertes umfassen, wobei bevorzugt jeder Merkmalswert eine vorgegebene Anzahl an Bits nicht überschreitet.
9. Verfahren nach einer der vorhergehenden Klauseln, dadurch gekennzeichnet, dass die Inventarliste weitere zur Verwaltung der Inventarliste und zur Ermittlung der Merkmalswerte notwendige Verwaltungsinformationen umfasst.
10. Verfahren nach einer der vorhergehenden Klauseln, dadurch gekennzeichnet, dass der Merkmalswertevektor wenigstens 64 Bit, 128 Bit, 256 Bit, 512 Bit, 1.024 Bit, 2.048 Bit oder wenigstens 4.096 Bit umfasst.
11. Verfahren nach einer der vorhergehenden Klauseln, dadurch gekennzeichnet, dass die Länge der Merkmalswerte in dem Merkmalswertevektor in Abhängigkeit des Merkmals unterschiedlich lang sind.
12. Verfahren nach einer der vorhergehenden Klauseln, dadurch gekennzeichnet, dass die Datenmenge der Redundanzwerte geringer ist als die gesamte Datenmenge aller Merkmalswerte, wobei bevorzugt die Menge der Redundanzwerte höchstens 10 % der Datenmenge der Merkmalswerte, weiter bevorzugt höchstens 20 %, 30 %, 40 %, 50 % oder besonders bevorzugt höchstens 70 % der Datenmenge der Merkmalswerte beträgt.
13. Verfahren nach einer der vorhergehenden Klauseln, dadurch gekennzeichnet, dass der kryptographische Schlüssel aus den Merkmalswerten mittels einer kryptographischen Funktion, bevorzugt mittels einer kryptographischen Prüfsumme, besonders bevorzugt mittels einer Hash-Funktion berechnet wird.
14. Verfahren nach einer der vorhergehenden Klauseln, dadurch gekennzeichnet, dass die fehlenden Merkmalswerte im aktuellen Merkmalswertevektor aus den Redundanzwerten mittels eines Fehlerkorrekturverfahrens ermittelt werden, wobei als Fehlerkorrekturverfahren bevorzugt Erasure Codes und besonders bevorzugt lineare Zufallscodes verwendet werden.
15. Verfahren nach einer der vorhergehenden Klauseln, dadurch gekennzeichnet, dass die Originär-Inventarliste auf dem Server derart verändert wird, dass ein Integritätsschutz der geänderten Inventarliste gewährleistet ist, wobei der Integritätsschutz bevorzugt durch das Anfügen einer digitalen Signatur oder eines kryptographischen Schlüssels erfolgt, der bei der Auswertung der Inventarliste auf dem Rechner berücksichtigt wird, vorzugsweise bei dem Vergleich der Originär-Prüfsummen mit den aktuellen Prüfsummen verwendet wird.
16. Verfahren nach Klausel 6, dadurch gekennzeichnet, dass das Erzeugen der Originär-Inventarliste bei der Installation des geschützten Anwendungsprogramms auf dem Rechner erfolgt.
17. Verfahren nach Klausel 6, dadurch gekennzeichnet, dass das Ermitteln der aktuellen Merkmalswerte der aktuellen Merkmale des Rechners vor jeder Ausführung des geschützten Anwendungsprogramms erfolgt.
18. Verfahren nach einer der vorhergehenden Klauseln, dadurch gekennzeichnet, dass nach dem Entschlüsseln des Berechtigungscodes und/oder nach dem Freischalten des geschützten digitalen Datenobjekts und/oder nach jedem Verwenden des geschützten digitalen Datenobjekts der entschlüsselte Berechtigungscode und/oder der generierte kryptographische Schlüssel auf dem Rechner gelöscht wird.
19. Verfahren nach einer der vorhergehenden Klauseln, dadurch gekennzeichnet, dass der aus dem Merkmalswertevektor erzeugte kryptographische Schlüssel und/oder der entschlüsselte Berechtigungscode nur in einem flüchtigen Speicher des Rechners zwischengespeichert wird.
20. Verfahren nach einer der vorhergehenden Klauseln, dadurch gekennzeichnet, dass die genutzte Datenmenge der Redundanzwerte in Abhängigkeit der Zeit erhöht wird, die seit der ersten Verwendung des geschützten digitalen Datenobjekts verstrichen ist, wobei bevorzugt die Menge der genutzten Redundanzwerte im Laufe der Zeit schrittweise erhöht werden kann.
21. Verfahren nach der vorhergehenden Klausel, dadurch gekennzeichnet, dass in dem Rechner die Zeit seit der ersten Verwendung des geschützten digitalen Datenobjekts gezählt wird und in Abhängigkeit mit der verstrichenen Zeit die Menge der genutzten Redundanzwerte vergrößert wird, wobei zu Beginn aus den erzeugten Redundanzwerten nur ein geringer Teil für das Ermitteln der fehlenden Merkmalswerte verwendet werden kann und der Anteil der genutzten Redundanzwerte mit fortschreitender Zeit steigt.
22. Verfahren nach Klausel 20, dadurch gekennzeichnet, dass die Gesamtheit der erzeugten Redundanzwerte in mehrere Teilmengen unterteilt werden, wobei jede Teilmenge der Redundanzwerte mit einem separaten kryptographischen Schlüssel verschlüsselt wird und die kryptographischen Schlüssel dem Rechner zeitabhängig zur Verfügung gestellt werden, wobei das Zurverfügungstellen bevorzugt dadurch erfolgt, dass der zur Entschlüsselung der verschlüsselten Teilmenge der Redundanzwerte benötigte Schlüssel auf einem separaten Rechner, bevorzugt einem Server, bevorzugt in einem Netzwerk, veröffentlicht wird und herunterladbar ist.
23. Verfahren nach Klausel 20, dadurch gekennzeichnet, dass
   wenn bei der Verwendung des geschützten digitalen Datenobjekts und der damit erfolgten Ermittlung der aktuellen Merkmalswerte der aktuellen Merkmale des Rechners erkannt wird, dass aktuelle Merkmalswerte von dem Originär-Merkmalswerten abweichen und die fehlenden Merkmalswerte aus den vorhandenen Redundanzwerten berechnet werden können,
   dann auf Grundlage der aktuellen Merkmalswerte die Redundanzwerte aktualisiert werden,
   wobei die Aktualisierung der Redundanzwerte entweder dadurch erfolgt, dass neue Redundanzwerte hinzufügt werden, um den ursprünglichen Schlüssel, auf dem die Verschlüsselung des Berechtigungscodes beruht, weiter zu verwenden, oder durch Erzeugen eines neuen kryptographischen Schlüssels auf Grundlage der aktuellen Merkmalswerte erfolgt, die auf Grundlage der aktuellen Merkmale der Rechnerkomponenten ermittelt werden, wobei der originäre kryptographische Schlüssel sowie eine Differenz des neuen kryptographischen Schlüssels und des originären kryptographischen Schlüssels auf dem Rechner abgespeichert werden.

## Patentansprüche

1. Verfahren zum Erzeugen eines kryptographischen Schlüssels auf Basis von aktuellen Komponenten eines Rechners (1) zur Entschlüsselung eines verschlüsselten rechnerspezifischen Berechtigungscodes (10) zur Ausführung eines geschützten digitalen Datenobjekts (11) auf dem Rechner (1), wobei der rechnerspezifische Berechtigungscode (10) mittels eines von originären Komponenten des Rechners (1) abhängigen Schlüssels (9) verschlüsselt ist,
umfassend die folgenden Schritte:
- Ermitteln von aktuellen Merkmalswerten (15) zu in einer Inventarliste (4, 8) abgelegten Merkmalen (3) des Rechners (1), wobei die Inventarliste (4, 8) Merkmale (3) für die originären Komponenten des Rechners (1), Originär-Prüfsummen (6) für jeden Originär-Merkmalswert (5) zu den in der Inventarliste (4, 8) abgelegten Merkmalen (3) und Redundanzwerte (7), die aus der Gesamtheit (25) der Originär-Merkmalswerte (5) ermittelt sind, umfasst;
- Berechnen von aktuellen Prüfsummen (16) aus den aktuellen Merkmalswerten (15);
- Vergleichen der aktuellen Prüfsummen (16) mit den Originär-Prüfsummen (6);
- Bei Gleichheit der Originär-Prüfsumme (6) mit der aktuellen Prüfsumme (16) Abspeichern des aktuellen Merkmalswertes (15) in einem aktuellen Merkmalswertevektor (13) und bei Ungleichheit Erstellen von Leerstellen (18) in dem aktuellen Merkmalswertevektor (13) anstelle des aktuellen Merkmalswertes (15);
- Ermitteln der fehlenden Merkmalswerte (15) in dem aktuellen Merkmalswertevektor (13) mittels der Redundanzdaten (7);
- Vervollständigen des aktuellen Merkmalswertevektors (13) mit den ermittelten Merkmalswerten (15);
- Generieren des kryptographischen Schlüssels (9) aus dem Merkmalswertevektor (13).

2. Verfahren nach Anspruch 1, **gekennzeichnet durch** die weiteren Schritte:
- Erzeugen einer Inventarliste (4) mit Merkmalen (3) für die originären Komponenten des Rechners (1);
- Ermitteln von Originär-Merkmalswerten (5) zu den in der Inventarliste (4) abgelegten Merkmalen (3);
- Ermitteln von Originär-Prüfsummen (6) für jeden der Originär-Merkmalswerte (5);
- Ermitteln von Redundanzwerten (7) aus der Gesamtheit (25) der Originär-Merkmalswerte (5).

3. Verfahren nach Anspruch 2, **gekennzeichnet durch** die folgenden weiteren Schritte:
- Erzeugen einer Originär-Inventarliste (8) mit den Merkmalen (3) des Rechners (1), den Originär-Prüfsummen (6) der Merkmale (3) und den ermittelten Redundanzwerten (7);
- Generieren des kryptographischen Schlüssels (9) aus der Gesamtheit (25) der Originär-Merkmalswerte (5);
- Übermitteln der Originär-Inventarliste (8) und des generierten Schlüssels (9) an einen Server (2) und Empfangen der Daten auf dem Server (2);
- Löschen der Originär-Merkmalswerte (5) und des Schlüssels (9) auf dem Rechner (1);
- Generieren des rechnerspezifischen Berechtigungscodes (10) zur Verwendung des geschützten digitalen Datenobjekts (11) mittels des empfangenen kryptographischen Schlüssels (9) auf dem Server (2);
- Übermitteln des mit dem kryptographischen Schlüssel (9) verschlüsselten Berechtigungscodes (10) von dem Server (2) an den Rechner (1) und Empfangen des Berechtigungscodes (10) im Rechner (1);
und/oder **durch** die weiteren Schritte:
- Entschlüsseln des verschlüsselten Berechtigungscodes (10) mittels des erzeugten kryptographischen Schlüssels (9) auf dem Rechner (1) und
- Freischalten des digitalen Datenobjekts (11) mittels des entschlüsselten Berechtigungscodes (10).

4. Verfahren nach einem der vorhergehenden Ansprüche, **gekennzeichnet durch** die folgenden weiteren Schritte:
- Übermitteln der Originär-Inventarliste (8) an den Server (2);
- Löschen der Originär-Inventarliste (8) einschließlich der Originär-Prüfsummen (6) auf dem Rechner (1);
- Signieren der Originär-Inventartiste (8) auf dem Server (2), bevorzugt mittels einer digitalen Signatur;
- Übertragen der signierten Originär-Inventarliste (8) an den Rechner (1) und Empfangen der signierten Originär-Inventarliste (8) auf dem Rechner (1).

5. Verfahren nach einem der vorhergehenden Ansprüche, **gekennzeichnet durch** die folgenden weiteren Schritte:
- Übertragen der Redundanzwerte (7) von dem Rechner (1) an den Server (2);
- Löschen der Redundanzwerte (7) auf dem Rechner (1);
- Signieren der übertragenen Redundanzwerte (7) auf dem Server (2);
- Übertragen der signierten Redundanzwerte (7) von dem Server (2) an den Rechner (1) und Empfangen der Redundanzwerte (7) auf dem Rechner (1);
und bevorzugt **durch** die folgenden weiteren Schritte:
- Verändern der empfangenen Redundanzwerte (7) auf dem Server (2), bevorzugt Reduzieren der Datenmenge der Redundanzwerte (7);
- Übertragen der geänderten Redundanzwerte-(7) an den Rechner (1).

6. Verfahren nach einem der vorhergehenden Ansprüche, **dadurch gekennzeichnet, dass** das digitale Datenobjekt (11) ein Anwendungsprogramm (12) ist.

7. Verfahren nach einem der vorhergehenden Ansprüche, **gekennzeichnet durch** die weiteren Schritte:
- Erstellen einer Vorgabe von Merkmalen (3) in dem Server (2) zur Erstellung der Inventarliste (4) in dem Rechner (1);
- Übermitteln der Vorgabe von Merkmalen (3) für die Inventarliste (4) an den Rechner (1);
- Erzeugen einer Inventarliste (4) mit Merkmalen (3) des Rechners (1) gemäß der von dem Server (2) empfangenen Vorgabe.

8. Verfahren nach einem der vorhergehenden Ansprüche, **dadurch gekennzeichnet, dass** die Inventarlisten (4, 8) für jedes Merkmal (3) des Rechners (1) Angaben zur Position des zugehörigen Merkmalswerts (15) in den Merkmalswertevektor (13) umfassen und/oder für jedes Merkmal (3) Informationen über die Länge des Merkmalswertes (15) umfassen, wobei bevorzugt jeder Merkmalswert (15) eine vorgegebene Anzahl an Bits nicht überschreitet.

9. Verfahren nach einem der vorhergehenden Ansprüche, **dadurch gekennzeichnet, dass** die Datenmenge der Redundanzwerte (7) geringer ist als die gesamte Datenmenge aller Merkmalswerte (15), wobei bevorzugt die Menge der Redundanzwerte (7) höchstens 10 % der Datenmenge der Merkmalswerte (15), weiter bevorzugt höchstens 20 % der Datenmenge der Merkmalswerte (15), weiter bevorzugt höchstens 30 % der Datenmenge der Merkmalswerte (15), sehr bevorzugt höchstens 40 % der Datenmenge der Merkmalswerte (15), sehr bevorzugt höchstens 50 % der Datenmenge der Merkmalswerte (15) und besonders bevorzugt höchstens 70 % der Datenmenge der Merkmalswerte (15) beträgt.

10. Verfahren nach einem der vorhergehenden Ansprüche, **dadurch gekennzeichnet, dass** die fehlenden Merkmalswerte (15) im aktuellen Merkmalswertevektor (13) aus den Redundanzwerten (7) mittels eines Fehlerkorrekturverfahrens (22) ermittelt werden, wobei als Fehlerkorrekturverfahren (22) bevorzugt Erasure Codes und besonders bevorzugt lineare Zufallscodes verwendet werden.

11. Verfahren nach einem der vorhergehenden Ansprüche, **dadurch gekennzeichnet, dass** die Originär-Inventarliste (8) auf dem Server (2) derart verändert wird, dass ein Integritätsschutz der geänderten Inventarliste (8) gewährleistet ist, wobei der Integritätsschutz bevorzugt durch das Anfügen einer digitalen Signatur oder eines kryptographischen Schlüssels erfolgt, der bei der Auswertung der Inventarliste (8) auf dem Rechner (1) berücksichtigt wird, vorzugsweise bei dem Vergleich der Originär-Prüfsummen (6) mit den aktuellen Prüfsummen (16) verwendet wird.

12. Verfahren nach einem der vorhergehenden Ansprüche, **dadurch gekennzeichnet, dass** die genutzte Datenmenge der Redundanzwerte (7) in Abhängigkeit der Zeit erhöht wird, die seit der ersten Verwendung des geschützten digitalen Datenobjekts (11) verstrichen ist, wobei bevorzugt die Menge der genutzten Redundanzwerte (7) im Laufe der Zeit schrittweise erhöht werden kann.

13. Verfahren nach dem vorhergehenden Anspruch, **dadurch gekennzeichnet, dass** in dem Rechner (1) die Zeit seit der ersten Verwendung des digitalen Datenobjekts (11) gezählt wird und in Abhängigkeit mit der verstrichenen Zeit die Menge der genutzten Redundanzwerte (7) vergrößert wird, wobei zu Beginn aus den erzeugten Redundanzwerten (7) nur ein geringer Teil für das Ermitteln der fehlenden Merkmalswerte (15) verwendet werden kann und der Anteil der genutzten Redundanzwerte (7) mit fortschreitender Zeit steigt.

14. Verfahren nach Anspruch 12 oder 13, **dadurch gekennzeichnet, dass** die Gesamtheit der erzeugten Redundanzwerte (7) in mehrere Teilmengen unterteilt werden, wobei jede Teilmenge der Redundanzwerte (7) mit einem separaten kryptographischen Schlüssel verschlüsselt wird und die kryptographischen Schlüssel dem Rechner (1) zeitabhängig zur Verfügung gestellt werden, wobei das Bereitstellen bevorzugt dadurch erfolgt, dass der zur Entschlüsselung der verschlüsselten Teilmenge der Redundanzwerte (7) benötigte Schlüssel auf einem separaten Rechner, bevorzugt auf einem Server (2), veröffentlicht wird und herunterladbarist.

15. Verfahren nach Anspruch 12, **dadurch gekennzeichnet, dass** wenn bei der Verwendung des geschützten Datenobjekts (11) und der damit erfolgten Ermittlung der aktuellen Merkmalswerte (15) der aktuellen Merkmale (3) des Rechners (1) erkannt wird, dass aktuelle Merkmalswerte (15) von dem Originär-Merkmalswerten (5) abweichen und die fehlenden Merkmalswerte (15) aus den vorhandenen Redundanzwerten (7) berechnet werden können,
dann auf Grundlage der aktuellen Merkmalswerte (15) die Redundanzwerte (7) aktualisiert werden,
wobei die Aktualisierung der Redundanzwerte (7) entweder dadurch erfolgt, dass neue Redundanzwerte (7) hinzugefügt werden, um den ursprünglichen Schlüssel (9), auf dem die Verschlüsselung des Berechtigungscodes (10) beruht, weiter zu verwenden, oder durch Erzeugen eines neuen kryptographischen Schlüssels auf Grundlage der aktuellen Merkmalswerte (15) erfolgt, die auf Grundlage der aktuellen Merkmale (3) der Rechnerkomponenten ermittelt werden, wobei der originäre kryptographische Schlüssel (9) sowie eine Differenz des neuen kryptographischen Schlüssels und des originären kryptographischen Schlüssels (9) auf dem Rechner (1) abgespeichert werden.

## Claims

1. Method for generating a cryptographic key on the basis of current components of a computer (1) for decryption of an encrypted, computer-specific authorization code (10) for running a protected digital data object (11) on the computer (1), wherein the computer-specific authorization code (10) is encrypted by means of a key (9), which depends on original components of the computer (1),
comprising the following steps:
- determining current feature values (15) for features (3) of the computer (1) that are stored in an inventory list (4, 8), wherein the inventory list (4, 8) comprises features (3) for the original components of the computer (1), original checksums (6) for each original feature value (5) for the features (3) stored in the inventory list (4, 8), and redundancy values (7) that are determined from the entirety (25) of the original feature values (5);
- calculating current checksums (16) from the current feature values (15);
- comparing the current checksums (16) with the original checksums (6);
- if the original checksum (6) and the current checksum (16) are identical, storing the current feature value (15) in a current feature value vector (13), and if they are not identical, creating spaces (18) in the current feature value vector (13) instead of the current feature value (15);
- determining the missing feature values (15) in the current feature value vector (13) using redundancy data (7);
- completing the current feature value vector (13) with the determined feature values (15);
- generating the cryptographic key (9) from the feature value vector (13).

2. Method according to claim 1, **characterized by** the further steps:
- generating an inventory list (4) with features (3) for the original components of the computer (1);
- determining original feature values (5) for those features (3) that are stored in the inventory list (4);
- determining original checksums (6) for each of the original feature values (5);
- determining redundancy values (7) from the entirety (25) of the original feature values (5).

3. Method according to claim 2, **characterized by** the following further steps:
- creating an original inventory list (8) with the features (3) of the computer (1), the original checksums (6) of the features (3) and the determined redundancy values (7);
- generating the cryptographic key (9) from the entirety (25) of the original feature values (5);
- transmitting the original inventory list (8) and the generated key (9) to a server (2) and receiving the data on the server (2);
- deleting the original feature values (5) and the key (9) on the computer (1);
- generating on the server (2) the computer-specific authorization code (10) for use of the protected digital data object (11) using the received cryptographic key (9);
- transmitting the authorization code (10) encrypted with the cryptographic key (9) from the server (2) to the computer (1) and receiving the authorization code (10) on the computer (1);
and/or by the further steps:
- decrypting the encrypted authorization code (10) using the generated cryptographic key (9) on the computer (1) and
- activating the digital data object (11) using the decrypted authorization code (10).

4. Method according to any one of the preceding claims, **characterized by** the following further steps:
- transmitting the original inventory list (8) to the server (2);
- deleting the original inventory list (8) including the original checksums (6) on the computer (1);
- signing the original inventory list (8) on the server (2), preferably with a digital signature;
- transmitting the signed original inventory list (8) to the computer (1) and receiving the signed original inventory list (8) on the computer (1).

5. Method according to any one of the preceding claims, **characterized by** the following further steps:
- transmitting the redundancy values (7) from the computer (1) to the server (2);
- deleting the redundancy values (7) from the computer (1);
- signing the transmitted redundancy values (7) on the server (2);
- transmitting the signed redundancy values (7) from the server (2) to the computer (1) and receiving the redundancy values (7) on the computer (1);
and preferably by the following further steps:
- changing the received redundancy values (7) on the server (2), preferably reducing the dataset of redundancy values (7);
- transmitting the changed redundancy values (7) to the computer (1).

6. Method according to any one of the preceding claims, **characterized in that** the digital data object (11) is an application program (12).

7. Method according to any one of the preceding claims, **characterized by** the further steps:
- creating a preset list of features (3) on the server (2) for preparing the inventory list (4) on the computer (1);
- transmitting the preset list of features (3) for the inventory list (4) to the computer (1);
- generating an inventory list (4) with features (3) of the computer (1) according to the preset list of features received from the server (2).

8. Method according to any one of the preceding claims, **characterized in that** the inventory lists (4, 8) comprise information on the position of the associated feature value (15) for each feature (3) of the computer (1) in the feature value vector (13) and/or information about the length of the feature value (15) for each feature (3), wherein each feature value (15) preferably does not exceed a predetermined number of bits.

9. Method according to any one of the preceding claims, **characterized in that** the dataset of the redundancy values (7) is smaller than the full dataset of all feature values (15), wherein the set of redundancy values (7) is preferably not more than 10% of the dataset of the feature values (15), more preferably not more than 20% of the dataset of the feature values (15), more preferably not more than 30% of the dataset of the feature values (15), very preferably not more than 40% of the dataset of the feature values (15), very preferably not more than 50% of the dataset of the feature values (15), and particularly preferably not more than 70% of the dataset of the feature values (15).

10. Method according to any one of the preceding claims, **characterized in that** the missing feature values (15) in the current feature value vector (13) are determined from the redundancy values (7) using an error correction method (22), wherein erasure codes are preferred and linear random codes are particularly preferred as error correction codes (22).

11. Method according to any one of the preceding claims, **characterized in that** the original inventory list (8) is modified on the server (2) in such a manner that an integrity protection of the changed inventory list (8) is guaranteed, wherein the integrity protection is preferably provided by appending a digital signature or a cryptographic key that is considered when evaluating the inventory list (8) on the computer (1), and preferably in the comparison of the original checksums (6) with the current checksums (16).

12. Method according to any one of the preceding claims, **characterized in that** the used dataset of redundancy values (7) is increased in accordance with the time that has elapsed since the protected digital data object (11) was used for the first time, wherein the set of redundancy values (7) used can preferably be increased incrementally over time.

13. Method according to the preceding claim, **characterized in that** the time since the first use of the digital data object (11) is counted on the computer (1) and the set of redundancy values (7) used is increased according to the elapsed time, wherein initially only a small fraction of the generated redundancy values (7) can be used to determine the missing feature values (15), and the fraction of used redundancy values (7) increases as time passes.

14. Method according to claim 12 or 13, **characterized in that** the entirety of generated redundancy values (7) is divided into a plurality of subsets, wherein each subset of the redundancy values (7) is encrypted with a separate cryptographic key and the cryptographic keys are made available to the computer (1) on a time-dependent basis, wherein the providing thereof is preferably assured by the key required for decrypting the encrypted subset of redundancy values (7) being published and downloadable on a separate computer, preferably a server (2).

15. Method according to claim 12, **characterized in that** if during use of the protected data object (11) and the determination of current feature values (15) of the current features (3) of the computer (1) carried out in the context thereof it is detected that current feature values (15) deviate from the original feature values (5) and the missing feature values (15) can be calculated from the existing redundancy values (7), then the redundancy values (7) are updated on the basis of the current feature values (15),
wherein the redundancy values (7) are either updated by the addition of new redundancy values (7), so that the original key (9) on which the encryption of the authorization code (10) is based may still be used, or by the generation of a new cryptographic key based on the current feature values (15), which are determined on the basis of the current features (3) of the computer components, wherein the original cryptographic key (9) and a difference between the new cryptographic key and the original cryptographic key (9) are stored on the computer (1).

## Revendications

1. Procédé de production d'une clé cryptographique à base de composants actuels d'un ordinateur (1) pour le décodage d'un code d'autorisation codé (10) spécifique de l'ordinateur en vue de l'exécution d'un objet de données numérique protégé (11) sur l'ordinateur (1), dans lequel le code d'autorisation spécifique de l'ordinateur (10) est codé au moyen d'une clé (9) dépendant de composants originaux de l'ordinateur (1), comprenant les étapes suivantes:
- déterminer des valeurs de caractéristiques actuelles (15) pour des caractéristiques (3) de l'ordinateur (1) déposées dans une liste d'inventaire (4, 8), dans lequel la liste d'inventaire (4, 8) comprend des caractéristiques (3) pour les composants originaux de l'ordinateur (1), des sommes de contrôle d'origine (6) pour chaque valeur de caractéristique originale (5) pour les caractéristiques (3) déposées dans la liste d'inventaire (4, 8) et des valeurs de redondance (7), qui sont déterminées à partir de la totalité (25) des valeurs de caractéristiques originales (5);
- calculer des sommes de contrôle actuelles (16) à partir des valeurs de caractéristiques actuelles (15);
- comparer les sommes de contrôle actuelles (16) avec les sommes de contrôle originales (6);
- en cas de concordance de la somme de contrôle originale (6) avec la somme de contrôle actuelle (16), mémoriser la valeur de caractéristique actuelle (15) dans un vecteur de valeurs de caractéristiques actuel (13) et en cas de discordance créer des places vides (18) dans le vecteur de valeurs de caractéristiques actuel (13) au lieu de la valeur de caractéristique actuelle (15);
- déterminer les valeurs de caractéristiques manquantes (15) dans le vecteur de valeurs de caractéristiques actuel (13) au moyen des données de redondance (7);
- compléter le vecteur de valeurs de caractéristiques actuel (13) avec les valeurs de caractéristiques déterminées (15);
- générer la clé cryptographique (9) à partir du vecteur de valeurs de caractéristiques (13).

2. Procédé selon la revendication 1, **caractérisé par** les étapes supplémentaires:
- produire une liste d'inventaire (4) avec des caractéristiques (3) pour les composants originaux de l'ordinateur (1);
- déterminer des valeurs de caractéristiques originales (5) pour les caractéristiques (3) déposées dans la liste d'inventaire (4);
- déterminer des sommes de contrôle originales (6) pour chacune des valeurs de caractéristiques originales (5);
- déterminer des valeurs de redondance (7) à partir de la totalité (25) des valeurs de caractéristiques originales (5).

3. Procédé selon la revendication 2, **caractérisé par** les étapes supplémentaires suivantes:
- produire une liste d'inventaire originale (8) avec les caractéristiques (3) de l'ordinateur (1), avec les sommes de contrôle originales (6) des caractéristiques (3) et avec les valeurs de redondance déterminées (7);
- générer la clé cryptographique (9) à partir de la totalité (25) des valeurs de caractéristiques originales (5);
- transmettre la liste d'inventaire originale (8) et la clé générée (9) à un serveur (2) et recevoir les données sur le serveur (2);
- effacer les valeurs de caractéristiques originales (5) et la clé (9) sur l'ordinateur (1);
- générer le code d'autorisation spécifique de l'ordinateur (10) pour l'utilisation de l'objet de données numérique protégé (11) au moyen de la clé cryptographique reçue (9) sur le serveur (2);
- transmettre le code d'autorisation (10) codé avec la clé cryptographique (9) du serveur (2) à l'ordinateur (1) et recevoir le code d'autorisation (10) dans l'ordinateur (1);
et/ou par les étapes supplémentaires:
- décoder le code d'autorisation codé (10) au moyen de la clé cryptographique produite (9) sur l'ordinateur (1); et
- valider l'objet de données numérique (11) au moyen du code d'autorisation décodé (10).

4. Procédé selon l'une quelconque des revendications précédentes, **caractérisé par** les étapes supplémentaires suivantes:
- transmettre la liste d'inventaire originale (8) au serveur (2);
- effacer la liste d'inventaire originale (8) y compris les sommes de contrôle originales (6) sur l'ordinateur (1);
- signer la liste d'inventaire originale (8) sur le serveur (2), de préférence au moyen d'une signature numérique;
- transférer la liste d'inventaire originale signée (8) à l'ordinateur (1) et recevoir la liste d'inventaire originale signée (8) sur l'ordinateur (1).

5. Procédé selon l'une quelconque des revendications précédentes, **caractérisé par** les étapes supplémentaires suivantes:
- transférer les valeurs de redondance (7) de l'ordinateur (1) au serveur (2);
- effacer les valeurs de redondance (7) sur l'ordinateur (1);
- signer les valeurs de redondance transférées (7) sur le serveur (2);
- transférer les valeurs de redondance signées (7) du serveur (2) à l'ordinateur (1) et recevoir les valeurs de redondance (7) sur l'ordinateur (1);
et de préférence par les étapes supplémentaires suivantes:
- changer les valeurs de redondance reçues (7) sur le serveur (2), de préférence réduire la quantité de données des valeurs de redondance (7);
- transférer les valeurs de redondance changées (7) à l'ordinateur (1).

6. Procédé selon l'une quelconque des revendications précédentes, **caractérisé en ce que** l'objet de données numérique (11) est un programme d'application (12).

7. Procédé selon l'une quelconque des revendications précédentes, **caractérisé par** les étapes supplémentaires:
- créer une instruction de caractéristiques (3) dans le serveur (2) pour la création de la liste d'inventaire (4) dans l'ordinateur (1);
- transmettre l'instruction de caractéristiques (3) pour la liste d'inventaire (4) à l'ordinateur (1);
- produire une liste d'inventaire (4) avec des caractéristiques (3) de l'ordinateur (1) selon l'instruction reçue du serveur (2).

8. Procédé selon l'une quelconque des revendications précédentes, **caractérisé en ce que** les listes d'inventaire (4, 8) comprennent pour chaque caractéristique (3) de l'ordinateur (1) des informations sur la position de la valeur de caractéristique correspondante (15) dans le vecteur de valeurs de caractéristiques (13) et/ou comprennent pour chaque caractéristique (3) des informations sur la longueur de la valeur de caractéristique (15), dans lequel chaque valeur de caractéristique (15) ne dépasse de préférence pas un nombre de bits prédéterminé.

9. Procédé selon l'une quelconque des revendications précédentes, **caractérisé en ce que** la quantité de données des valeurs de redondance (7) est plus petite que la quantité totale de données de toutes les valeurs de caractéristiques (15), dans lequel la quantité des valeurs de redondance (7) vaut de préférence au maximum 10 % de la quantité de données des valeurs de caractéristiques (15), de préférence encore au maximum 20 % de la quantité de données des valeurs de caractéristiques (15), de préférence encore au maximum 30 % de la quantité de données des valeurs de caractéristiques (15), de préférence particulière au maximum 40 % de la quantité de données des valeurs de caractéristiques (15), de préférence particulière encore au maximum 50 % de la quantité de données des valeurs de caractéristiques (15), et de toute préférence encore au maximum 70 % de la quantité de données des valeurs de caractéristiques (15).

10. Procédé selon l'une quelconque des revendications précédentes, **caractérisé en ce que** les valeurs de caractéristiques manquantes (15) dans le vecteur de valeurs de caractéristiques actuel (13) sont déterminées à partir des valeurs de redondance (7) au moyen d'une procédure de correction d'erreur (22), dans lequel on utilise comme procédures de correction d'erreur (22) des codes d'effacement et en particulier de préférence des codes aléatoires linéaires.

11. Procédé selon l'une quelconque des revendications précédentes, **caractérisé en ce que** la liste d'inventaire originale (8) sur le serveur (2) est modifiée de telle manière qu'une protection de l'intégrité de la liste d'inventaire modifiée (8) soit garantie, dans lequel la protection de l'intégrité est opérée de préférence par l'ajout d'une signature numérique ou d'une clé cryptographique, qui est prise en considération lors de l'exploitation de la liste d'inventaire (8) sur l'ordinateur (1), et est utilisée de préférence lors de la comparaison des sommes de contrôle originales (6) avec les sommes de contrôle actuelles (16).

12. Procédé selon l'une quelconque des revendications précédentes, **caractérisé en ce que** la quantité de données utilisée des valeurs de redondance (7) est augmentée en fonction du temps qui s'est écoulé depuis la première utilisation de l'objet de données numérique protégé (11), dans lequel la quantité des valeurs de redondance utilisées (7) peut être de préférence augmentée pas à pas au cours du temps.

13. Procédé selon la revendication précédente, **caractérisé en ce que** le temps depuis la première utilisation de l'objet de données protégé (11) est compté dans l'ordinateur (1) et la quantité des valeurs de redondance utilisées (7) est augmentée en fonction du temps écoulé, dans lequel au début seule une faible partie des valeurs de redondance produites (7) peut être utilisée pour la détermination des valeurs de caractéristiques manquantes (15) et la proportion des valeurs de redondance utilisées (7) croît avec le temps qui s'écoule.

14. Procédé selon la revendication 12 ou 13, **caractérisé en ce que** la totalité des valeurs de redondance produites (7) est divisée en plusieurs quantités partielles, dans lequel chaque quantité partielle des valeurs de redondance (7) est codée avec une clé cryptographique séparée et les clés cryptographiques sont communiquées à l'ordinateur (1) en fonction du temps, dans lequel la communication est opérée de préférence par le fait que la clé nécessaire pour le décodage de la quantité partielle codée des valeurs de redondance (7) est divulguée et est téléchargeable sur un ordinateur séparé, de préférence sur un serveur (2).

15. Procédé selon la revendication 12, **caractérisé en ce que** lorsque, lors de l'utilisation de l'objet de données protégé (11) et de la détermination ainsi effectuée des valeurs de caractéristiques actuelles (15) des caractéristiques actuelles (3) de l'ordinateur (1), on reconnaît que des valeurs de caractéristiques actuelles (15) s'écartent des valeurs de caractéristiques originales (5) et que les valeurs de caractéristiques manquantes (15) peuvent être calculées à partir des valeurs de redondance présentes (7),
on actualise alors les valeurs de redondance (7) sur la base des valeurs de caractéristiques actuelles (15),
dans lequel on effectue l'actualisation des valeurs de redondance (7) soit par l'ajout de nouvelles valeurs de redondance (7) pour continuer à utiliser la clé initiale (9) sur laquelle repose le codage du code d'autorisation (10), soit par la production d'une nouvelle clé cryptographique sur la base des valeurs de caractéristiques actuelles (15) qui sont déterminées sur la base des caractéristiques actuelles (3) des composants de l'ordinateur, dans lequel la clé cryptographique originale (9) ainsi qu'une différence entre la nouvelle clé cryptographique et la clé cryptographique originale (9) sont mémorisées sur l'ordinateur (1).
